**Europäisches Patentamt**

**European Patent Office**

**Office européen des brevets**

(19)

(11) Veröffentlichungsnummer : **0 414 690 B1**

(12) # EUROPÄISCHE PATENTSCHRIFT

(45) Veröffentlichungstag der Patentschrift :
18.12.91 Patentblatt 91/51

(51) Int. Cl.$^5$ : **B60C 23/04, F16B 21/16**

(21) Anmeldenummer : **89902935.9**

(22) Anmeldetag : **08.03.89**

(86) Internationale Anmeldenummer :
**PCT/DE89/00141**

(87) Internationale Veröffentlichungsnummer :
**WO 89/10852 16.11.89 Gazette 89/27**

(54) DRUCKSENSOR ZUR ERFASSUNG DES REIFENDRUCKS.

(30) Priorität : 07.05.88 DE 3815677

(43) Veröffentlichungstag der Anmeldung :
06.03.91 Patentblatt 91/10

(45) Bekanntmachung des Hinweises auf die
Patenterteilung :
18.12.91 Patentblatt 91/51

(84) Benannte Vertragsstaaten :
DE FR IT SE

(56) Entgegenhaltungen :
DE-A- 3 523 774
FR-A- 669 089
FR-A- 2 404 375

(73) Patentinhaber : ROBERT BOSCH GmbH
Postfach 10 60 50
W-7000 Stuttgart 10 (DE)

(72) Erfinder : SCHRUMPF, Hans
Hebelstra e 5
W-8507 Oberasbach (DE)
Erfinder : HAAS, Lothar
Kastanienweg 10
W-8504 Stein (DE)
Erfinder : HETTICH, Gerhard
Holzgraben 30
W-8501 Ro tal (DE)

## Beschreibung

Die Erfindung richtet sich auf einen Drucksensor bzw. -schalter zur Erfassung des Luftdrucks im Inneren von auf eine Felge aufgezogenen schlauchlosen Reifen von Kraftfahrzeugen, wobei dessen Gehäuse eine korrespondierende Ausnehmung einer Felgenwand durchsetzt und mit Hilfe von Befestigungseinrichtungen an der Felge luftdicht festgelegt ist.

Ein derartiger Drucksensor, wie er z.B. aus der DE-A-35 23 774 bekannt ist, dient dazu, den Luftdruck in einem schlauchlosen Kraftfahrzeugreifen zu überwachen und ein elektrisches Signal dann abzugeben, wenn der Luftdruck in dem Reifen sich vom Normalzustand abweichend ändert, insbesondere wenn der Luftdruck aufgrund eines Defekts in der Reifenwand absinkt.

Zur Befestigung derartiger Drucksensoren bzw. -schalter ist herkömmlicherweise vorgesehen, daß das Gehäuse ein Außengewinde aufweist und in eine Ausnehmung der Felge eingesetzt wird, wobei das Gehäuse dann gegen die Felgenwand mittels einer auf das Gewinde aufgebrachten Mutter luftdicht verspannt wird.

Diese Art der Befestigung weist den Nachteil auf, daß aufgrund der erforderlichen Gewindelänge der Drucksensor bzw. -schalter realtiv weit über die Felgenwand vorsteht. Dies ist montagetechnisch unerwünscht und birgt die Gefahr von Beschädigungen bei einem Reifenwechsel. Vor allem aber wird durch die metallische Mutter der Detektionsabstand für die Signalübertragung von dem Sensor zu einem drehfesten Empfänger reduziert, da durch diese der für die Signalübertragung vorgesehene Schwingkreis bedämpft wird.

Hiervon ausgehend liegt der Erfindung die Aufgabe zugrunde, einen Drucksensor bzw. -schalter so auszubilden, daß er sich einfach, gegen Beschädigungen geschützt und hinsichtlich der Signalübertragung vorteilhaft an einer Felgenwand befestigen und erforderlichenfalls wieder lösen läßt.

Diese Aufgabe wird erfindungsgemäß dadurch gelöst, daß das Gehäuse einen äußeren, gegen die Felgenwand anliegenden Flanschabschnitt und im Abstand hierzu einen umlaufenden Ringflansch aufweist, wobei Federelemente vorgesehen sind, welche sich einerseits an dem Ringflansch und andererseits an einer Seite der Felgenwand abstützen, um den Flanschabschnitt des Gehäuses gegen die jeweils andere Felgenwand zu verspannen.

Durch die danach vorgesehene Verspannung mittels einer Feder wird eine schnelle und einfache Montage ermöglicht, welche bei geringer Bauhöhe realisierbar ist und zudem den Vorteil bietet, daß die Demontage nicht durch die Korrosion oder Beschädigung eines Gewindes erschwert wird.

Vorzugsweise ist vorgesehen, daß der Flanschabschnitt eine umlaufende Ringnut für einen Dicht-O-Ring aufweist. Auf diese Weise ist durch die Federverspannung ein luftdichter Abschluß des Reifeninnenraums gewährleistet.

Günstigerweise kann der Flanschabschnitt zur Anlage an einem korrespondierend ausgebildeten Wandabschnitt der Felgenwand konisch ausgebildet sein. Hierdurch wird eine Art Keilverspannung und damit ein besonders fester Sitz erreicht. Wenn die Keilfläche an der Gehäusewand an der Innenseite der Felgenwand zur Anlage kommt, wird aufgrund der Zentrifugalkraft der feste Sitz des Gehäuses noch erhöht.

Bei einer besonders vorteilhaften Ausführungsform ist der Ringflansch durch zwei in eine Ringnut des Gehäuses einsetzbare, korrespondierende Ringscheibenhälften gebildet. Hierdurch wird es problemlos möglich, das Gehäuse des Drucksensors bzw. -schalters durch die entsprechende Ausnehmung in der Felgenwand zu schieben und von der jeweils anderen Seite her dann die Ringscheibenhälften aufzustecken, um auf diese Weise eine axiale Fixierung zu erreichen.

Die zwischen der Felgenwand und dem Ringflansch vorgesehene Feder kann günstigerweise als eine Art Tellerfeder ausgebildet sein, wobei die Formgebung im Detail von der konischen Konfiguration einer Tellerfeder abweichen kann.

Vorteilhafterweise ist vorgesehen, daß die Tellerfeder Vorsprünge bzw. Ausnehmungen aufweist, welche mit entsprechenden Ausnehmungen bzw. Vorsprüngen der Ringscheibenhälften korrespondieren. Auf diese Weise sind die Ringscheibenhälften nach dem Aufsetzen auch in radialer Richtung fixiert, wenn die entsprechenden Vorsprünge bzw. Ausnehmungen ineinander eingreifen.

Bei einer anderen Ausführungsform ist vorgesehen, daß die Tellerfeder einen den Ringflansch übergreifenden, umlaufenden Wulst aufweist. Auch hierdurch kann eine radiale Fixierung der beiden den Ringflansch ausbildenden Ringscheibenhälften erreicht werden.

Weitere Merkmale, Vorteile und Einzelheiten der Erfindung ergeben sich aus der folgenden Beschreibung einer bevorzugten Ausführungsform anhand der Zeichnung. Dabei zeigen

Fig. 1 eine Seitenansicht des Gehäuses eines erfindungsgemäßen Drucksensors bzw. -schalters,

Fig. 2 eine der beiden einen Ringflansch ausbildenden Ringscheibenhälften,

Fig. 3 eine Aufsicht auf eine Tellerfeder,

Fig. 4 eine Seitenansicht der Feder nach Fig. 3,

Fig. 5 einen Schnitt durch einen an einer Felge mit Hilfe der Feder nach Fig. 3 bzw. 4 und der Ringscheibenhälften nach Fig. 2 montierten Drucksensor,

Fig. 6 eine abgewandelte Ausführungsform von Ringscheibenhälften,

Fig. 7 eine zweite Ausführungsform einer Tellerfeder,

Fig. 8 einen Schnitt der in Fig. 7 dargestellten Tellerfeder und

Fig. 9 einen Querschnitt durch einen Drucksensor, welcher mit Hilfe der in Fig. 7 und 8 dargestellten Feder bzw. der in Fig. 6 dargestellten Ringscheibenhälften an einer Felge montiert ist.

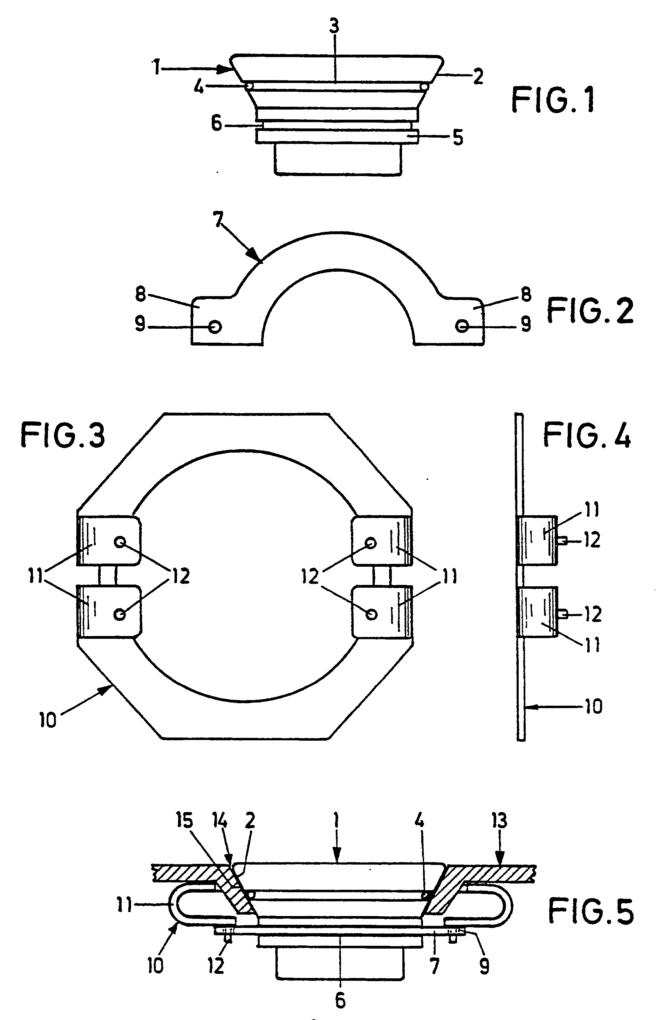

In Fig. 1 ist ein Drucksensor-Gehäuse 1 für einen Drucksensor dargestellt, wie er z.B. im einzelnen in Fig. 2 der DE-A-35 23 774 dargestellt und beschrieben ist. Das Gehäuse 1 weist einen sich konisch verjüngenden Flanschabschnitt 2 auf, welcher mit einer Ringnut 3 zur Aufnahme eines Dicht-O-Rings 4 versehen ist.

In einem Abstand von dem konischen Flanschabschnitt 2 ist an einem zylinderförmigen Gehäuseabschnitt 5 eine Ringnut 6 ausgebildet.

Fig. 2 zeigt eine Aufsicht auf eine von zwei Ringscheibenhälften 7, welche sich paarweise zu einem geschlossenen Ring ergänzen. Die Ringscheibenhälften 7 weisen nach außen vorstehende Abschnitte 8 mit Ausnehmungen 9 auf. Diese sind im Ausführungsbeispiel als kreisrunde Bohrungen ausgebildet.

In Fig. 3 ist eine tellerfederartig ausgebildete Feder 1o dargestellt. Die Feder 1o weist im Querschnitt U-förmig nach innen gebogene Abschnitte 11 auf, von welchen nach außen stiftartige Vorsprünge 12 abstehen. Im Ausführungsbeispiel sind vier derartige Abschnitte 11 mit vier Vorsprüngen 12 vorgesehen. Der Relativabstand der Vorsprünge 12 und deren Abmessungen sind so gewählt, daß sie in die Ausnehmungen 9 von zwei zusammengesetzten Ringscheibenhälften 7 eingreifen können.

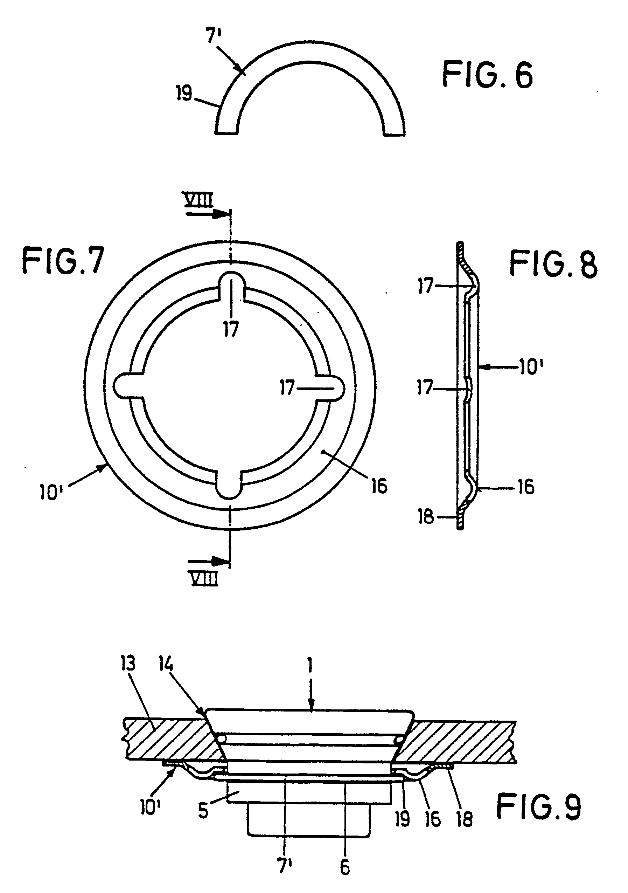

Fig. 5 zeigt, wie ein in Fig. 1 dargestellter Drucksensor bzw. dessen Gehäuse 1 in eine ausschnittweise dargestellte Felgenwand 13 montiert werden kann, wobei das Reifeninnere sich bei der Darstellung nach Fig. 5 oben befindet.

Zur Montage wird das Gehäuse 1 (in Fig. 5 von oben) durch eine korrespondierende Ausnehmung 14 mit konisch verlaufenden Seitenwänden der Felgenwand 13 geschoben, bis der Flanschabschnitt 2 des Gehäuses 1 zur Anlage an der konischen Innenwand 15 der Ausnehmung 14 gelangt, wobei durch den eingelegten Dicht-O-Ring 4 eine gasdichte Anlage gewährleistet ist.

Nun wird die Feder 1o aufgeschoben, so daß die Ansätze 11 federnd zur Anlage an der Felgenwand 13 gelangen und die Stiftansätze 12 in Fig. 5 nach unten weisen. Anschließend werden die beiden Ringscheibenhälften 7 aus zwei sich um 18o° gegenüberliegenden Richtungen in die Ringnut 6 eingeschoben, bis die stiftförmigen Ansätze 12 in die Ausnehmungen 9 einrasten. Auf diese Weise sind die Ringscheibenhälften 7 über die Vorsprünge 12 radial und über die Nut 6 axial gesichert. Damit ist aber auch aufgrund der Federwirkung der Ansätze 11 das Gehäuse 1 gegen die Felgenwand 13 verspannt und festgelegt.

Bei der in den Fig. 6 bis 9 dargestellten Ausführungsform sind die Ringscheibenhälften 7' als einfache Ringhälften ausgebildet (vgl. Fig. 6).

Eine in Fig. 7 dargestellte Feder 1o' weist einen umlaufenden Ringwulst 16 auf. Vier Aussparungen 17 sorgen für die Einstellung einer gewünschten Federcharakteristik.

Wie in Fig. 9 dargestellt, wird bei dieser Ausführungsform das Gehäuse 1 zunächst wie im Zusammenhang mit Fig. 5 beschrieben in eine Ausnehmung 14 der Felgenwand 13 eingesetzt.

Es wird dann die tellerfederartige Feder 1o' auf den zylinderförmigen Gehäuseabschnitt 5 so aufgeschoben, daß der Außenrand 18 der Feder 1o' zur Anlage an der Felgenwand 13 gelangt und der Ringwulst 16 in die entgegengesetzte Richtung, d.h. in Fig. 9 nach unten weist. Werden nun die Ringscheibenhälften 7' unter elastischer Deformation der Feder 1o' in die Ringnut 6 eingerastet, übergreift der Ringwulst 16 den Außenrand 19 der Ringscheibenhälften 7' und legt diese radial fest. Gleichzeitig ist das Gehäuse 1 auf diese Weise in der Ausnehmung 14 der Felgenwand 13 verspannt.

## Patentansprüche

1. Drucksensor bzw. -schalter zur Erfassung des Luftdrucks im Inneren von auf eine Felge aufgezogenen, schlauchlosen Reifen von Kraftfahrzeugen, wobei dessen Gehäuse (1) eine korrespondierende Ausnehmung einer Felgenwand (13) durchsetzt und mit Hilfe von Befestigungseinrichtungen (4,6,7,10) an der Felge luftdicht festgelegt ist, dadurch gekennzeichnet, daß das Gehäuse (1) einen äußeren, gegen die Felgenwand (13) anliegenden Flanschabschnitt (2) und im Abstand hierzu einen umlaufenden Ringflansch (Ringscheibenhälften 7,7') aufweist, wobei Federelemente (Federn 1o,1o') vorgesehen sind, welche sich einerseits an dem Ringflansch (Ringscheibenhälften 7,7') und andererseits an einer Seite der Felgenwand (13) abstützen, um den Flanschabschnitt (2) des Gehäuses (1) gegen die jeweils andere Seite der Felgenwand (13) zu verspannen.

2. Drucksensor nach Anspruch 1, dadurch gekennzeichnet, daß der Flanschabschnitt (2) eine umlaufende Ringnut (3) für einen Dicht-O-Ring (4) aufweist.

3. Drucksensor nach Anspruch 1, <u>dadurch gekennzeichnet, daß</u> der Flanschabschnitt (2) zur Anlage an einem korrespondierend ausgebildeten Wandabschnitt (14) der Felgenwand (13) konisch ausgebildet ist.

4. Drucksensor nach Anspruch 1, <u>dadurch gekennzeichnet, daß</u> der Ringflansch durch zwei in eine Ringnut (6) des Gehäuses (1) einsetzbare, korrespondierende Ringscheibenhälften (7,7') gebildet ist.

5. Drucksensor nach Anspruch 4, <u>dadurch gekennzeichnet, daß</u> zwischen der Felgenwand (13) und dem Ringflansch (Ringscheibenhälften 7,7') eine tellerfederartige Feder (1o,1o') eingelegt ist.

6. Drucksensor nach Anspruch 5, <u>dadurch gekennzeichnet, daß</u> die Feder (10) Vorsprünge (12) bzw. Ausnehmungen aufweist, welche mit korrespondierenden Ausnehmungen (9) bzw. Vorsprüngen der Ringscheibenhälften (7) verrasten.

7. Drucksensor nach Anspruch 5, dadurch <u>gekennzeichnet, daß</u> die Feder (1o') einen den Ringflansch (Ringscheibenhälften (7') übergreifenden, umlaufenden Wulst (19) aufweist.

## Claims

1. Pressure sensor or pressure switch for determining the air pressure in the interior of tubeless motor vehicle tyres mounted on a rim, the housing (1) of the sensor or switch penetrating a corresponding recess in a rim wall (13), and being secured to the rim in a air-tight manner with the aid of fastening devices (4,6,7,10), characterised in that the housing (1) has an outer flange section (2) bearing against the rim wall (13) and a circumferential annular flange (annular half-discs 7,7') at a distance from the flange section (2), spring elements (springs 10,10') being provided, which are supported, on the one hand, on the annular flange (annular half-discs 7,7') and, on the other hand, on one side of the rim wall (13), in order to tension the flange section (2) of the housing (1) against the respective other side of the rim wall (13).

2. Pressure sensor according to Claim 1, characterised in that the flange section (2) has a circumferential annular groove (3) for a seal O-ring (4).

3. Pressure sensor according to Claim 1, characterised in that the flange section (2) is constructed conically in order to bear against a correspondingly constructed wall section (14) of the rim wall (13).

4. Pressure sensor according to Claim 1, characterised in that the ring flange is formed by two corresponding annular half-discs (7,7'), which can be inserted into an annular groove (6) of the housing (1).

5. Pressure sensor according to Claim 4, characterised in that a spring (10,10') of plate-spring type is inserted between the rim wall (13) and the annular flange (annular half-discs 7,7').

6. Pressure sensor according to Claim 5, characterised in that the spring (10) has projections (12) or recesses, which engage with corresponding recesses (9) or projections of the annular half-discs (7).

7. Pressure sensor according to Claim 5, characterised in that the spring (10') has a circumferential bead (19) overlapping the annular flange (annular half-discs 7').

## Revendications

1. Détecteur ou commutateur de pression, pour connaître la pression d'air à l'intérieur des pneus sans chambre à air montés sur une jante, d'un véhicule à moteur. Le boîtier (1) du détecteur logeant dans un évidement correspondant d'une paroi de jante (13) et étant fixé de façon étanche sur la jante à l'aide de dispositifs (4,6,7,10) de fixation, détecteur caractérisé en ce que le boîtier (1) présente un flanc annulaire (2) extérieur reposant contre la paroi de jante (13) et d'une certaine distance de là un flanc annulaire faisant le tour (moitiés de disques annulaires 7,7'), des éléments de ressort (ressorts 10,10') étant prévus qui s'appuient d'un côté sur le flanc annulaire (moitiés de disques annulaires 7,7') et par ailleurs, sur un côté de la paroi de jante (13), pour serrer la section de flanc (2) du boîtier (1) contre l'autre côté de la paroi de jante (13).

2. Détecteur de pression selon la revendication 1, caractérisé en ce que la section de flanc (2) présente une rainure annulaire (3) pour un joint d'étanchéité torique (4).

3. Détecteur de pression selon la revendication 1, caractérisé en ce que la section de flanc (2) a une forme conique pour venir en appui sur une section de paroi (14) de la jante formée de façon correspondante.

4. Détecteur de pression selon la revendication 1, caractérisé en ce que le flanc annulaire est formé par deux moitiés de disques annulaires (7,7') correspondantes, pouvant s'insérer dans une rainure annulaire (6) du boîtier (1).

5. Détecteur de pression selon la revendication 4, caractérisé en ce qu'entre la paroi de jante (13) et le flanc annulaire (moitiés de disques annulaires 7,7') est installé un ressort du type ressort à disques (10,11).

6. Détecteur de pression selon la revendication 5, caractérisé en ce que le ressort (10) présente des saillies (12) ou des évidements, qui pénètrent dans les évidements (9) ou saillies correspondants des moitiés de disques à ressort (7).

7. Détecteur de pression selon la revendication 5, caractérisé en ce que le ressort (10') présente un bourrelet (19) faisant le tour, tenant en prise avec le flanc annulaire (moitiés de disque annulaires 7').

FIG.1

FIG.2

FIG.3

FIG.4

FIG.5

EP 0 414 690 B1

FIG. 6

FIG.7

FIG. 8

FIG.9

7